# EUROPÄISCHE PATENTSCHRIFT

(11) **EP 2 754 916 B1**
(45) Veröffentlichungstag und Bekanntmachung des Hinweises auf die Patenterteilung: **06.06.2018**
(21) Anmeldenummer: 13171179.8
(22) Anmeldetag: 10.06.2013
(51) Int. Cl.: F16F 9/32, B60G 17/056, B60G 17/015, B60G 17/052, F16F 9/04

(54) **Luftfedereinheit für eine Luftfederanlage eines Fahrzeugs**
Pneumatic spring unit for a pneumatic suspension installation of a vehicle
Unité d'amortisseur pneumatique pour une installation d'amortisseur pneumatique d'un véhicule

(30) Priorität: 11.01.2013 DE 102013100295
(43) Veröffentlichungstag der Anmeldung: 16.07.2014
(73) Patentinhaber: Gudzulic, Miro, 83512 Wasserburg (DE)
(72) Erfinder: Gudzulic, Miro, 83512 Wasserburg (DE)
(74) Vertreter: Hofstetter, Schurack & Partner

(56) Entgegenhaltungen:
- EP-A1- 1 845 278
- EP-A2- 1 985 886
- WO-A1-03/029687
- WO-A2-2007/118674
- DE-A1- 19 530 260
- DE-A1-102006 005 471
- DE-A1-102008 015 732
- DE-A1-102010 012 413
- FR-A1- 2 663 100
- GB-A- 2 406 548
- US-A1- 2006 267 297

## Beschreibung

Die Erfindung betrifft eine Luftfedereinheit, insbesondere für eine Luftfederanlage eines Fahrzeugs, gemäß dem Oberbegriff von Patentanspruch 1. Des Weiteren betrifft die Erfindung eine Luftfederanlage mit wenigstens einen solchen Luftfedereinheit.

Luftfederanlagen für Fahrzeuge, beispielsweise für Kraftwagen oder Fahrzeuge ohne eigenen Antrieb wie zum Beispiel Anhänger oder Sattelauflieger weisen üblicher Weise eine relativ aufwändige Anordnung bzw. Schaltung mit einer jeweiligen Anzahl von Luftfedern je Fahrzeugachse und mit jeweiligen Ventilen auf. Die Luftfedern und Ventile sind dabei über Druckluftleitungen miteinander verbunden, welche erheblichen Belastungen durch mechanischen und witterungsbedingten Verschleiß ausgesetzt sind. Die Druckluftleitungen zwischen den jeweiligen Luftfedern und den zugeordneten Ventilen stehen dabei üblicher Weise permanent unter Druck, unabhängig ob das Fahrzeug steht oder fährt. Aus diesem Grund müssen zwischen den Anschlüssen der Luftfedern bzw. Ventilen einerseits und den Druckluftleitungen andererseits sehr teure und aufwändig zu montierende Verschraubungselemente eingesetzt werden.

Dennoch ist es aus der Praxis bekannt, dass üblicher Weise bis zu 90% der im Kraftwagen zur Erzeugung der Druckluft benötigten Energie in Form von Wärme oder anderen, beispielsweise mechanischen Verlusten verloren geht bzw. dass 30 - 40% der Druckluft selbst über Leckagen entweichen. Ein weiteres Problem besteht darin, dass ein großer Montageaufwand zum Verlegen der Luftfederanlage im Fahrzeug erforderlich ist. Gerade die Verlegung und Wartung der Druckluftleitungen zwischen den Luftfedern und den Ventilen ist dabei aufgrund der Unterfluranordnung am Fahrzeug sehr aufwändig. Schließlich ist auch die Verlegung weiterer Leitungen beispielsweise für Sensoren wie Druck- oder Höhensensoren sehr aufwändig.

US 2006/267297, die den Oberbegriff des Anspruchs 1 offenbart, zeigt eine solche Ventileinheit, welche oberseitig eines korrespondierenden Luftfederbalgs beziehungsweise außenseitig eines solchen angeordnet ist, und bei welchem bereits entsprechende Anschlüsse in Überdeckung mit Durchgangsöffnungen des Balgs vorgesehen sind. EP 1 985 886 A2 zeigt eine andere Luftfedereinheit. FR 2 663 100 A1 zeigt einen Luftfederbalg, welcher zwei Volumina aufweist, ein kleineres und ein größeres. Je nach Schaltung können diese beiden Volumina verbunden oder getrennt sein, was zu einer weicheren beziehungsweise härteren Charakteristik des Luftfederbalgs führt. Die beiden Volumina und sind dabei über ein Ventil miteinander verbunden, welches als 2/2-Wegeventil gestaltet ist, welches seinerseits über ein 3/2-Wegeventil mit Druckluft gesteuert wird. Ein in seiner Funktionsweise weitgehend identisches Ventil ist auch aus der WO 03/029687 A1 bekannt.

Aufgabe der vorliegenden Erfindung ist es daher, eine Luftfedereinheit und eine Luftfederanlage der eingangs genannten Art zu schaffen, mittels welchen sich eine einfachere, kostengünstiger herstellbare und gegen Energie- bzw. Druckluftverluste unanfälligere Luftfederanlage realisieren lässt.

Diese Aufgabe wird erfindungsgemäß durch eine Luftfedereinheit, insbesondere für eine Luftfederanlage eines Fahrzeugs, mit den Merkmalen des Patentanspruchs 1 sowie durch eine Luftfederanlage mit den Merkmalen des Patentanspruchs 10 gelöst. Vorteilhafte Ausgestaltungen mit zweckmäßigen und nicht-trivialen Weiterbildungen der Erfindung sind in den abhängigen Patentansprüchen angegeben.

Um eine Luftfedereinheit gemäß Patentanspruch 1 zu schaffen, mittels welcher sich eine einfachere, kostengünstiger herstellbare und gegen Energie- bzw. Druckluftverluste unanfälligere Luftfederanlage realisieren lässt, ist das Schaltventil zum Steuern der Luftfeder erfindungsgemäß zumindest mittelbar außenseitig der Abdeckung der Luftfeder angeordnet, wobei der Schaltventilanschluss und der in der Abdeckung der Luftfeder vorgesehene Luftfederanschluss zumindest im Wesentlichen in Überdeckung zueinander angeordnet sind. Durch diese zumindest im Wesentlichen überdeckte Anordnung des Schaltventilanschlusses mit dem Luftfederanschluss kann auf eine Druckluftleitung zwischen diesen beiden Bauteilen verzichtet werden. Da durch die Druckbeaufschlagung des Federbalgs auch der Übergang zwischen dem Luftfederanschluss und dem Ventilanschluss mit dem Druck der Druckluft beaufschlagt ist, ist es erfindungsgemäß besonders vorteilhaft, dass in diesem Übergang zwischen dem Luftfederanschluss und dem Ventilanschluss auf eine Druckluftleitung verzichtet werden kann. Infolge dessen kann nicht nur eine einfache Verbindung zwischen dem Luftfederanschluss und dem Ventilanschluss realisiert werden, welcher kostengünstiger herstellbar ist, sondern es kann auch auf aufwändige Verschraubungselemente verzichtet werden. Einhergehend mit den beschriebenen Vorteilen ist es zudem, dass ein ganz neuralgischer Bereich für Energie- bzw. Druckluftverluste innerhalb der Luftfederanlage eliminiert ist.

Im Übergang zwischen dem Luftfederanschluss und dem Ventilanschluss könnte dabei eine Verbindungsmuffe oder dgl. zum Einsatz kommen, welche einerseits mit dem Luftfederanschluss und andererseits mit dem Ventilanschluss verbunden, beispielsweise verschraubt wird. Somit könnte der Übergang zwischen dem Luftfederanschluss und dem Ventilanschluss gegebenenfalls durch eine kurze Metallmuffe oder dgl. gebildet sein. Erfindungsgemäß weist das Schaltventil einen zwischen einer Schließstellung und wenigstens einer Offenstellung verstellbaren Kolben auf. In einer besonders vorteilhaften Ausgestaltung der Erfindung weist das Schaltventil einen weiteren Schaltventilanschluss auf. Über den Luftfederanschluss, den ersten Schaltventilanschluss und den weiteren Schaltventilanschluss kann Luft in die Luftfeder, d.h. in ihren Federbalg, eingeleitet werden. Mit anderen Worten kann die Luftfeder - in der Offenstellung des Kolbens - über den Luftfederanschluss und die Schaltventilanschlüsse mit einer Druckluftversorgung fluidisch gekoppelt werden, so dass Luft in die Luftfeder einströmen kann. Ferner kann vorgesehen sein, dass Luft aus der Luftfeder - insbesondere in der Offenstellung des Kolbens - über den Luftfederanschluss und die Schaltventilanschlüsse aus der Luftfeder ausgeleitet werden kann.

Der erste Schaltventilanschluss und die Luftfeder mit dem Luftfederanschluss sind dabei in der Schließstellung des Kolbens von dem weiteren Schaltventilanschluss fluidisch getrennt. Vorzugsweise entspricht die Schließstellung einer Grundstellung des Kolbens, in welcher beispielsweise ein elektrisch betätigbarer Aktor zum Verstellen des Kolbens unbestromt ist, d.h. nicht mit elektrischem Strom versorgt wird.

In einer besonders vorteilhaften Ausgestaltung der Erfindung ist es vorgesehen, dass das Schaltventil im Bereich des Schaltventilanschlusses mittels einer Dichtung gegenüber der Abdeckung im Bereich des Luftfederanschluss abgedichtet ist. Demzufolge ist eine unmittelbare Anlage eines Teils des Schaltventils an einem korrespondierenden Teil der Luftfeder, welche mittels einer Dichtung abgedichtet ist, besonders vorteilhaft, da somit - in einer Ausführung - auf jegliche Art von Verbindung zwischen dem Luftfederanschluss und dem Ventilanschluss verzichtet werden kann.

In weiterer Ausgestaltung der Erfindung ist wenigstens ein weiterer Schaltventilanschluss, insbesondere für einen Sensor, mit einem in der Abdeckung der Luftfeder vorgesehenen weiteren Luftfederanschluss zumindest im Wesentlichen in Überdeckung zueinander angeordnet. Der Sensor ist dabei insbesondere ein Höhensensor, der dem Ventil zugeordnet ist bzw. vorzugsweise innerhalb des Ventils angeordnet ist. Somit ist es denkbar, dass mittels des Sensors über den Luftfederanschluss und den Ventilanschluss eine Höhenlage der Luftfeder bzw. des Fahrzeugs ermittelt wird.

Eine weitere vorteilhafte Ausführungsform der Erfindung sieht ein Kolbenteil des Schaltventils vor, das aus einer Metalllegierung oder einem Kunststoff gebildet ist. An dieses kann sich ein Aktorteils des Schaltventils aus einem Kunststoff anschließen. Somit ist ein besonders bedarfsgerechtes und leichtes Schaltventil geschaffen.

In vorteilhafter Ausgestaltung der Erfindung ist ein Sensor, insbesondere ein Drucksensor, über eine fluidische Sensorleitung mit dem Schaltventilanschluß verbunden. Somit kann auf einfache Weise über den ohnehin vorhandenen wenigstens einen Schaltventilanschluss ein Prozessparameter ermittelt werden. Des Weiteren ergibt sich eine Reduzierung der zu verlegenden Leitungen zum Verbinden der Sensoren.

Weiterhin hat sich eine Ausgestaltung der Erfindung als vorteilhaft gezeigt, bei welcher von dem Schaltventilanschluss ein Anschluss für eine weitere Luftfeder abgezweigt ist. Durch eine derartige Ausgestaltung kann auf einfache Weise eine weitere Luftfeder mittels des Schaltventils gesteuert werden. Die Verbindung zwischen dem abzweigenden Anschluss und einem Luftfederanschluss der weiteren Luftfeder muss dann allerdings beispielsweise mittels einer flexiblen Druckleitung vorgenommen werden.

In weiterer Ausgestaltung der Erfindung ist ein mit einem Höhensensor korrespondierender Magnet, insbesondere ein Dauermagnet, auf Seiten der Luftfeder vorgesehen.

Die vorstehend im Zusammenhang mit der erfindungsgemäßen Luftfedereinheit genannten Vorteile gelten in ebensolcher Weise für die Luftfederanlage gemäß Anspruch 10. Diese zeichnet sich des Weiteren dadurch aus, dass die wenigstens eine Luftfedereinheit in eine über ein Hauptventil mit Druckluft versorgbare Schaltung integriert ist, wobei die Schaltung in einer Grundstellung des Hauptventils drucklos geschaltet ist. Somit ist mittels des Hauptventils sichergestellt, dass die Schaltung, in welche die wenigstens eine Luftfedereinheit integriert ist, während des Betriebs drucklos ist. Somit ist lediglich der Übergang zwischen dem Luftfederanschluss und dem Ventilanschluss druckbeaufschlagt durch die im Federbalg vorherrschende Druckluft. Dieser Übergang weist jedoch die oben beschriebenen Vorteile auf.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1: einen Schaltplan einer Luftfederanlage für ein Fahrzeug in Form eines Sattelaufliegers mit zwei Tragachsen mit zugehörigen Luftfedereinrichtungen, welche über eine Hebe- und Senkeinrichtung anhebbar bzw. absenkbar sind, und mit einer Liftachse, welche mittels einer pneumatischen Lifteinrichtung anhebbar bzw. absenkbar ist;
- Fig. 2: einen Schaltplan einer Luftfederanlage für ein Fahrzeug in Form eines Sattelaufliegers in einer zur Fig. 1 alternativen Ausgestaltung, welches eine Tragachse und eine Liftachse umfasst, deren jeweilige Luftfedern links und rechts separat steuerbar sind;
- Fig. 3: einen Schaltplan einer Luftfederanlage in einer ähnlichen Ausgestaltung wie die Anlage gemäß Fig. 2,
- Fig. 4a, 4b: jeweilige ausschnittsweise dargestellte Schaltpläne der Luftfederanlagen gemäß den Fig. 1 bis 3 im Bereich der jeweiligen Hebe- und Senkeinrichtung deren zugehörigen Tragachsen;
- Fig. 5a, 5b: jeweils eine Schnittansicht durch ein pneumatisch betätigbares Schaltventil der Luftfedereinrichtung der Liftachse der Luftfederanlage gemäß den Fig. 1 bzw. 2, wobei jeweilige, um 90° zueinander gedrehte Längsschnitte des Schaltventils dargestellt sind;
- Fig. 6: eine Schnittansicht durch eine Luftfedereinheit mit einem elektrisch schaltbaren Ventil, welches im vorliegenden Fall oberseitig an einer zugehörigen Luftfeder befestigt ist und außerdem einen Steueranschluss für eine Druckluftleitung aufweist, über welche der der Kolben des Schaltventils in Abhängigkeit für eines in der Druckluftleitung vorherrschenden Luftdruck schaltbar ist;
- Fig. 7: eine schematische Schnittansicht durch eine weitere Luftfedereinheit eines weiteren, oberhalb einer zugehörigen Luftfeder befestigten elektrisch schaltbaren Schaltventils, bei welchem das elektrische Betätigungselement des Kolbens als Linearschrittmotor ausgebildet ist, wobei außerdem wiederum eine Druckluftleitung an einem Steueranschluss des Schaltventils vorgesehen ist, mittels welchem der Kolben in Abhängigkeit eines in der Druckluftleitung vorherrschenden Luftdrucks schaltbar ist; und in
- Fig. 8: ein Diagramm zu dem Schaltventil gemäß Fig. 7, wobei auf der y-Achse jeweils verstellbare Höhe der Luftfeder gedeutet ist und auf der x-Achse hierzu relative Durchflussmenge an Luft durch das entsprechende Schaltventil.

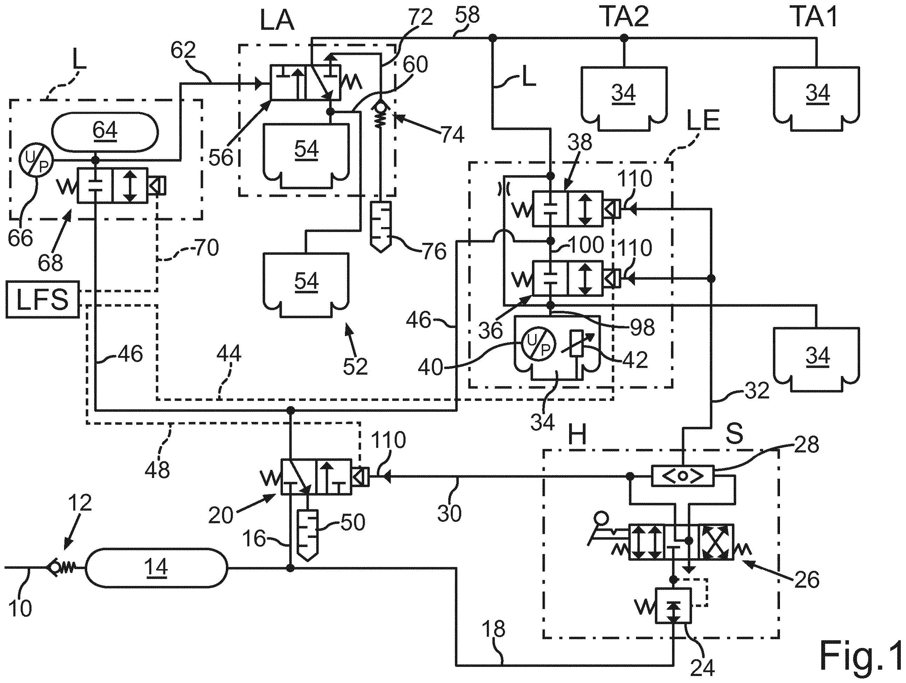

In Fig. 1 ist ein Schaltplan einer Luftfederanlage für ein Fahrzeug in Form eines Sattelaufliegers dargestellt. Prinzipiell eignen sich die Luftfederanlagen auch für andere Arten von Fahrzeugen, also beispielsweise Anhänger, Trailer oder aber auch für Kraftwagen selbst, beispielsweise Lastkraftwagen oder Zugmaschinen.

Im vorliegenden Fall umfasst der Sattelauflieger zwei Tragachsen TA1 und TA2 sowie eine Liftachse LA, welche im Bedarfsfall mittels einer im Weiteren noch näher erläuterten Lifteinrichtung L angehoben bzw. abgesenkt werden kann, sodass deren Räder entsprechend Kontakt zur Fahrbahn haben oder nicht. Die gesamte Luftfederanlage ist über eine Luftfedersteuerung LFS auf noch näher beschriebene weitere Weise steuerbar.

Die gesamte Luftfederanlage wird über eine Leitung 10 mittels eines nicht weiter dargestellten Kompressors mit Druckluft versorgt, welche nach Passieren eines Rückschlagventils 12 in einem Druckluftspeicher 14 gespeichert wird. Nach dem Druckluftspeicher 14 zweigen zwei Leitungen 16, 18 ab, wobei über die Leitung 16 ein Hauptventil 20 und über die Leitung 18 eine Hebe- und Senkeinrichtung 22 mit Luft beaufschlagbar ist.

Die Hebe- und Senkeinrichtung 22 umfasst einen Druckminderer 24 sowie ein Handventil 26, welches als 4/3-WegeSchaltventil ausgebildet ist. Schließlich umfasst die Hebe- und Senkeinrichtung 22 ein Oder-Ventil 28, dessen Funktion ebenfalls noch näher erläutert wird. Von der Hebe- und Senkeinrichtung 22 führt eine Leitung 30 zum Hauptventil 20 und eine Leitung 32 zu den Tragachsen TA1 und TA2.

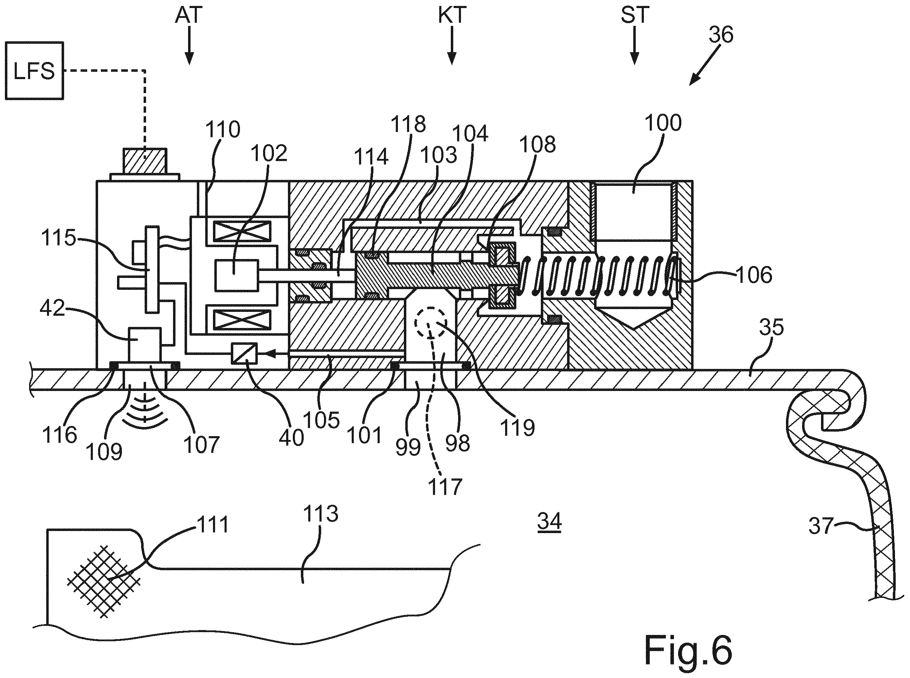

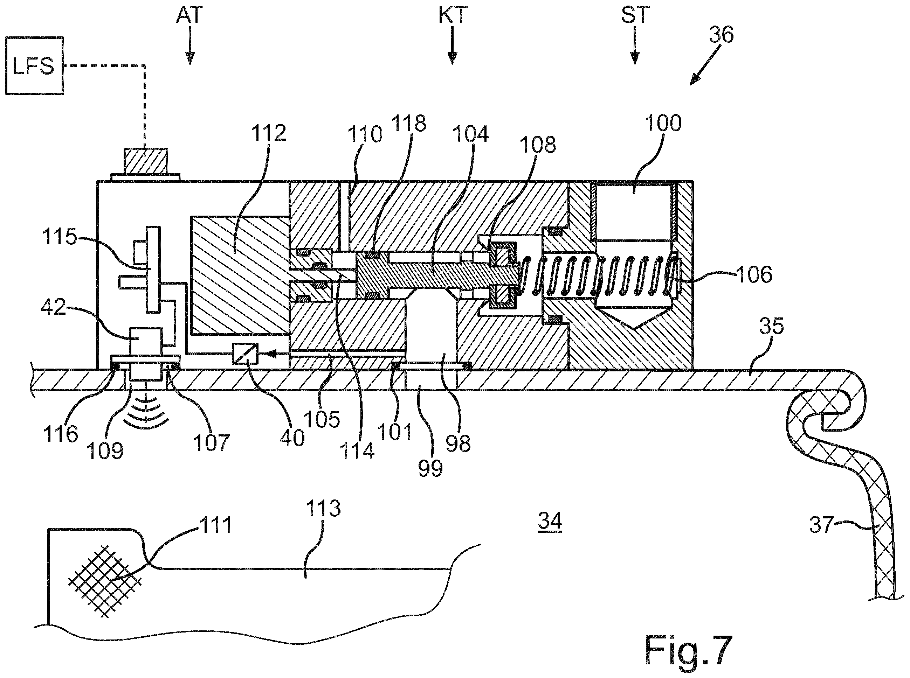

Die Tragachsen TA1 und TA2 umfassen jeweilige Luftfedern 34, welche im vorlegenden Fall durch zwei Schaltventile 36, 38 in Verbindung stehen. Je nach Anordnung der Schaltventile 36, 38 ist es denkbar, eine Trennung zur separaten Be- bzw. Entlüftung der Luftfedern 34 der vorderen und der hinteren Tragachse TA1 bzw. TA2 oder der linken und der rechten Seite vorzunehmen. Gegebenenfalls wäre es auch denkbar, alle Luftfedern 34 separat anzusteuern. Bei den Schaltventilen 36, 38 handelt es sich im vorliegenden Fall um jeweilige, elektrisch schaltbare 2/2-WegeSchaltventile, welche jedoch außerdem zur jeweiligen Schaltbetätigung einen Anschluss für die Druckluftleitung 32 aufweisen. Auf die genaue Ausgestaltung eines derartigen, elektrisch schaltbaren Schaltventils wird im Zusammenhang mit den Fig. 6 und 7 noch näher eingegangen werden. Wenigstens eine in der Luftfedern 34 ist vorliegend mit einem Sensor 40 bzw. einem Höhensensor 42 verbunden, welche vorzugsweise in das zugehörige Schaltventil 36 bzw. 38 integriert sind. Auch bezüglich dieser Ausgestaltung wird auf die Fig. 6 bzw. 7 verwiesen.

Die beiden Schaltventile 36, 38 sowie jeweils die beiden Luftfedern 34 der Tragachsen TA1 und TA2 bilden somit eine Luftfedereinrichtung LE, welche auf folgende Weise steuerbar ist:
Im Normalbetrieb des Sattelaufliegers, in der dieser an der zugehörigen Sattelzugmaschine samt Stromversorgung angekoppelt ist, erfolgt die Steuerung über die Luftfedersteuerung LFS. Diese kann entweder in der Zugmaschine oder im Sattelauflieger integriert sein. Soll nun eine Höhenanpassung der Luftfedern 34 erfolgen, so werden die beiden Schaltventile 36, 38 in bekannter Weise über eine Steuerleitung 44 angesteuert, wobei über das Schaltventil 36 die eine Fahrzeugseite und über das Schaltventil 38 die andere Fahrzeugseite anhebbar bzw. absenkbar ist. Die Luftversorgung der Luftfedern 34 erfolgt dabei über eine Druckluftleitung 46, welche durch entsprechendes Ansteuern des Schaltventils 20 über eine Steuerleitung 48 mit Druck beaufschlagbar ist.

Insbesondere außerhalb des Fahrbetriebs, wenn eine entsprechende Stromversorgung der Luftfederanlage bzw. der Luftfedersteuerung LFS vorliegt, soll das Fahrzeug über die Tragachsen TA1 und TA2 mittels der Hebe- und Senkeinrichtung 22 auch dann betätigbar sein, wenn keine Stromversorgung vorliegt. Die Hebe- und Senkeinrichtung 22 wird demzufolge über den vollen Druckluftspeicher 14 mit entsprechender Druckluft versorgt. In der in Fig. 1 gezeigten Ausgangsstellung ist dabei das Handventil 26 in einer mittleren Halteposition dargestellt. Aus dieser Halteposition kann das Handventil 26 in Richtung nach rechts gedrückt werden, um die Hebefunktion H zu erreichen. Hierdurch gelangt Druckluft über die Druckluftleitung 18 durch das Handventil 26 und über das Oder-Ventil 28 zur Druckluftleitung 32. Über diese Druckluftleitung 32 werden die beiden Halteventile 36, 38 aus ihrer jeweiligen Schließstellung in ihre jeweilige Offenstellung betätigt. Über die Leitung 30 wird in gleicher Weise das Hauptventil 20 geschaltet, sodass Druckluft durch die Druckluftleitung 16 zur Druckluftleitung 46 gelangt. Über die geschalteten Halteventile 36, 38 gelangt die Druckluft zu den jeweiligen Luftfedern 34, sodass diese mit Druckluft befüllt und der Sattelauflieger im Bereich seiner Tragachsen TA1 undTA2 angehoben wird.

Umgekehrt wird bei der Senkfunktion der Hebe- und Senkeinrichtung 22 das Schaltventil 26 in Richtung nach links bewegt, wobei Druckluft abermals aus der Druckluftleitung 18 über das Handventil 26 und das Oder-Ventil 28 zur Leitung 32 gelangt und hierdurch die beiden Halteventile 36, 38 geschalten werden. Im Unterschied zur Hebefunktion H gelangt jedoch keine Druckluft zur Leitung 30, sodass das Hauptventil 20 in der in Fig. 1 gezeigten, ungeschalteten Stellung verbleibt. Durch das Schalten der Halteventile 36, 38 gelangt somit Druckluft aus den Luftfedern 34 heraus und über die Leitung 46 zum Hauptventil 20, wo die Luft über einen Schalldämpfer 50 ins Freie entweichen kann. Somit wird ein gleichmäßiges Absenken des Fahrzeugs im Bereich seiner beiden Tragachsen TA1 und TA2 erreicht.

Über eine geeignete Ansteuerung einer entsprechenden Anzahl von Halteventilen 36, 38 ist es dabei - wie vorstehend bereits erläutert - auch möglich, eine Trennung der linken bzw. rechten Fahrzeugseite bzw. der vorderen und hinteren Tragachse TA1, TA2 zu erreichen, um beispielsweise Luft nur einer Fahrzeugseite zuzuführen bzw. aus dieser abzulassen.

Die Liftachse LA ist über eine Luftfedereinrichtung 52 abgestützt, welche vorliegend zwei Luftfedern 54 umfasst. Die beiden Luftfedern 54 sind vorliegend über ein gemeinsames Schaltventil 56 steuerbar, welches als 3/2-Wegeventil gebildet ist. Eine Druckluftleitung 58 versorgt die Luftfedern 54 mit Luft. Diese Druckluftleitung 58 ist unter Vermittlung des Halteventils 38 mit der Leitung 46 und unter Vermittlung des Hauptventils 20 mit dem Druckluftspeicher 14 verbunden. Über eine jeweilige Leitung 60 sind die beiden Luftfedern 54 mit dem Schaltventil 56 verbunden. Schaltbar ist das Schaltventil 56 über eine zusätzliche Druckluftleitung 62, welche mit der im weiter noch näher erläuterten Lifteinrichtung L verbunden ist.

Die Lifteinrichtung L dient dazu, die Liftachse LA bei Nichtgebrauch anzuheben bzw. bei Gebrauch abzusenken. Zunächst umfasst die Lifteinrichtung L hierzu einen Luftbalg 64, wobei gegebenenfalls auch eine andere Einrichtung genutzt werden kann. Der Luftbalg 64 ist über ein magnetisch bzw. elektrisch schaltbares Schaltventil 66 mit der Druckluftleitung 46 verbunden, welche ihrerseits unter Vermittlung des Hauptventils 20 mit dem Druckluftspeicher 14 in Verbindung steht. Außerdem umfasst die Lifteinrichtung L im vorliegenden Fall einen Drucksensor 66, über welchen ein Druck innerhalb des Luftbalgs 64 ermittelt werden kann. Weiterhin ist erkennbar, dass die Druckluftleitung 62 in Richtung des Schaltventils 56 zwischen dem Schaltventil 68 und dem Luftbalg 64 abzweigt.

Die Lifteinrichtung L mit deren zugehöriger Luftfedereinrichtung 52 der Liftachse LA funktioniert nun folgendermaßen:
Wird über die Luftfedersteuerung LFS über eine Steuerleitung 70 ein entsprechendes Signal gegeben, so schaltet das Schaltventil 68. Gleichzeitig wird über die Steuerleitung 48 das Hauptventil 20 geschaltet, sodass Druckluft über die Leitung 46 durch das Schaltventil 68 in den Luftbalg 64 gelangt. Durch die Druckbeaufschlagung des Luftbalgs 64 wird dabei erreicht, dass die zugehörige Liftachse LA angehoben wird.

Dabei ist es jedoch erforderlich, dass die Luftfedern 54 der Luftfedereinrichtung 52 der Liftachse LA entsprechend entlüftet werden, da ansonsten die Kraft des Luftbalgs 64 entgegen der Luftfedern 54 wirkt. Um dies zu erreichen, dient die Verbindung der Lifteinrichtung L mit der Luftfedereinrichtung 52 über die Druckluftleitung 62. Wird nämlich innerhalb der Luftfeder 64 und somit auf der Druckluftleitung 62 ein entsprechender Luftdruck erreicht, so erzeugt dieser über die Druckluftleitung 62 ein entsprechendes Schaltsignal auf das Schaltventil 56, welches bewirkt, dass dieses in Richtung nach rechts geschaltet wird. Durch Schalten des Schaltventils 56 wird wiederum erreicht, dass Luft aus dem Luftbalg 64 über die zugehörigen Leitungen 60 durch das Schaltventil 56 hindurch gelangen und von dort aus über eine Leitung 72 und ein Überdruckventil 74 bzw. über einen Schalldämpfer 76 ins Freie gelangen kann. Durch das Überdruckventil 74 wird dabei sichergestellt, dass ein Restdruck innerhalb der Luftfedern 54 verbleibt, sodass beispielsweise das Gummi der Bälge der Luftfedern 54 vor Beschädigungen geschützt ist. Somit ist die Liftachse LA angehoben und ein Restdruck innerhalb der Luftfedern 54 vorhanden. In diesem Zustand sind beide erforderlichen Schaltventile, nämlich das Hauptventil 20 und das Schaltventil 68, im stromlosen, ungeschalteten Zustand.

Um umgekehrt die Liftachse LA wieder zu senken, wird das Schaltventil 68 über die Luftfedersteuerung LFS geschaltet, wodurch Luft aus dem Luftbalg 64 über die Leitung 46, das Hauptventil 20 vom Schalldämpfer 50 ins Freie gelangt. Durch das Entleeren des Luftbalgs 64 fällt auch der Druck in der Steuerleitung 62 zum Schaltventil 56, wodurch dieses zurück in die in Fig. 1 gezeigt Grundstellung gelangt. Dadurch entsteht wieder eine Verbindung zwischen den Luftfedern 54 bzw. deren Leitung 60 und der Versorgungsleitung 58, sodass durch entsprechendes Schalten des Hauptventils 20 und des Halteventils 38 die Luftfedern 64 belüftet werden können. In diesem Zusammenhang sei erwähnt, dass über das Halteventil 38 die Luftfedern 64 der Liftachse LA auch mit der Hebe- und Senkeinrichtung 22 gekoppelt sind.

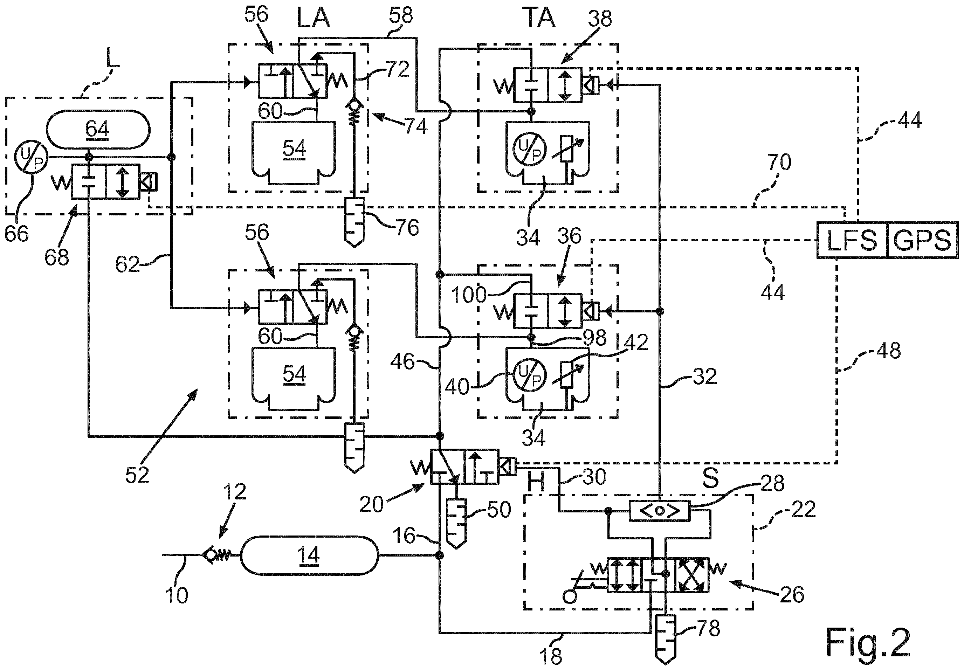

Die Luftfederanlage gemäß Fig. 2 ist im Wesentlichen analog bzw. identisch zu derjenigen gemäß Fig. 1 aufgebaut, sodass im Wesentlichen lediglich auf die Unterschiede eingegangen wird. So ist bei der Luftfederanlage gemäß Fig. 2 bei der Hebe- und Senkeinrichtung 22 auf den Druckminderer 24 verzichtet worden, wobei demgegenüber ein Schalldämpfer 78 vorgesehen ist. Die beiden Halteventile 36 ,38 sind vorliegend so aufgeteilt, dass eine Links-Rechts-Trennung der Luftfedern 34 erfolgt. In jeder Luftfeder 34 ist dabei ein Drucksensor 40 bzw. Höhensensor 42 zugeordnet.

Die Gestaltung der Liftachse LA unterscheidet sich im Wesentlichen dadurch, dass deren Luftfedereinrichtung 52 zwei Schaltventile 56 mit zugehörigen Schaltungskreisläufen aufweist, im Unterschied zu dem lediglich einen Schaltventil 56 gemäß Fig. 1. Hierdurch sind die beiden Luftfedern 54 ebenfalls getrennt voneinander schaltbar. Ansonsten erfolgt der Betrieb der Luftfederanlage hinsichtlich der Liftachse LA als auch der lediglich einen Tragachse TA analog zur Ausführung gemäß Fig. 1.

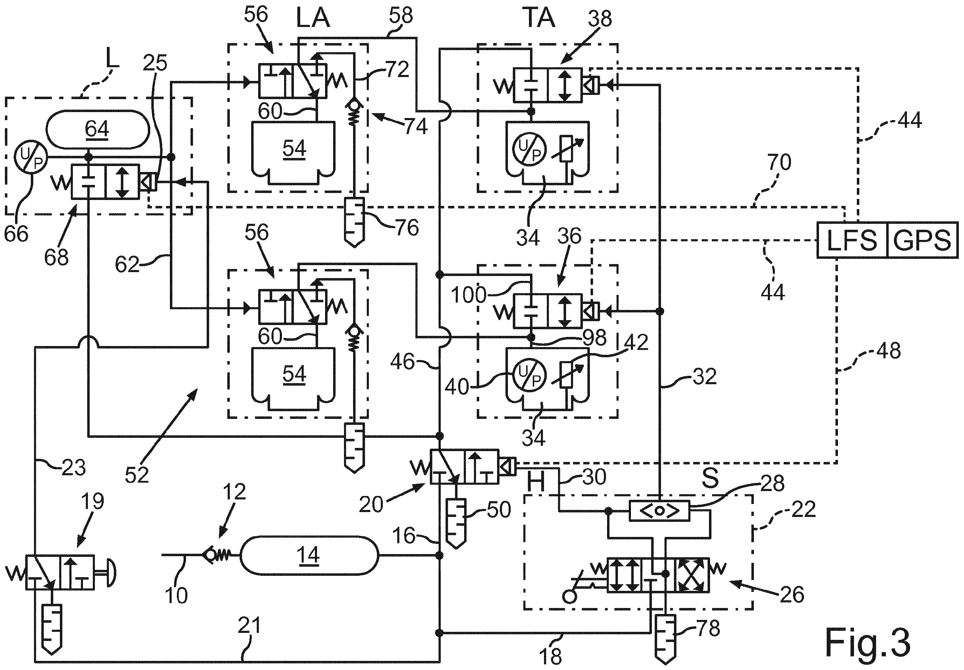

Die Ausführungsform der Luftfederanlage gemäß Fig. 3 unterscheidet sich von derjenigen gemäß Fig.2 dadurch, dass zusätzlich ein von Hand betätigbares Schaltventil 19 vorgesehen ist, welches über eine Leitung 21 mit der Leitung 18 verbunden ist. Über eine Leitung 23 ist das Schaltventil mit einem Schaltanschluss 25 des Schaltventils 68 verbunden. Durch Betätigen des Schaltventils 19 von Hand kann somit das Schaltventil 68 geschaltet werden, sodass Druckluft aus der Luftfeder 64 über das Hauptventil 20 und den Schalldämpfer 50 ins Freie gelangt.

Hierdurch wird die Liftachse L abgesenkt und die Druckluftleitung 62 entlüftet. Die Schaltventile 56 gelangen somit in ihre Grundstellung. Dadurch entsteht wieder eine Verbindung zwischen den Luftfedern 54 bzw. deren Leitung 60 und der Versorgungsleitung 58, sodass durch entsprechendes Schalten des Hauptventils 20 und des Halteventils 38 die Luftfedern 64 belüftet werden können.

Aus allen bisher beschrieben Ausführungsformen ist somit erkennbar, dass die Luftfederanlage wenigstens eine Achse (TA1, TA2, LA, L) umfasst, welcher wenigstens eine im Weiteren insbesondere im Zusammenhang mit Fig.6 noch näher beschriebene Luftfedereinheit zugeordnet ist, welche in eine über das Hauptventil 20 mit Druckluft versorgbare Schaltung integriert ist, wobei die Schaltung in einer Grundstellung des Hauptventils 20 drucklos ist.

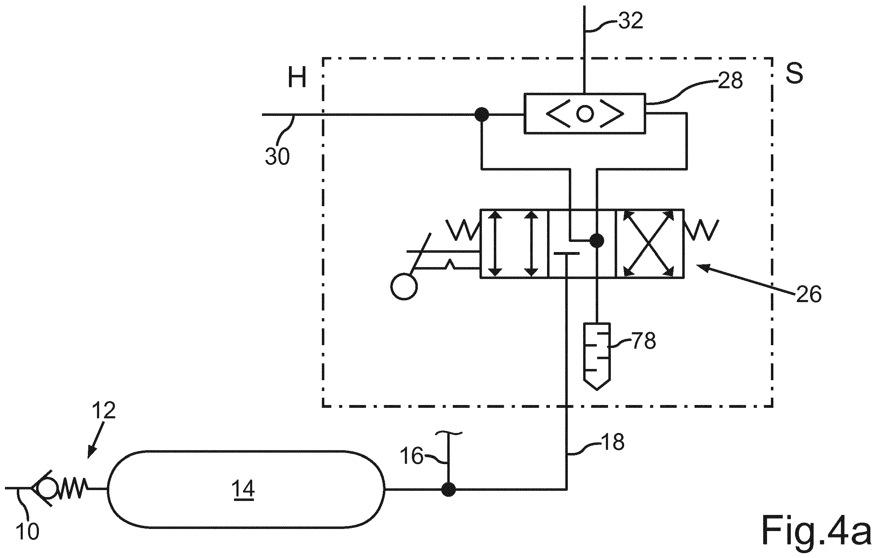

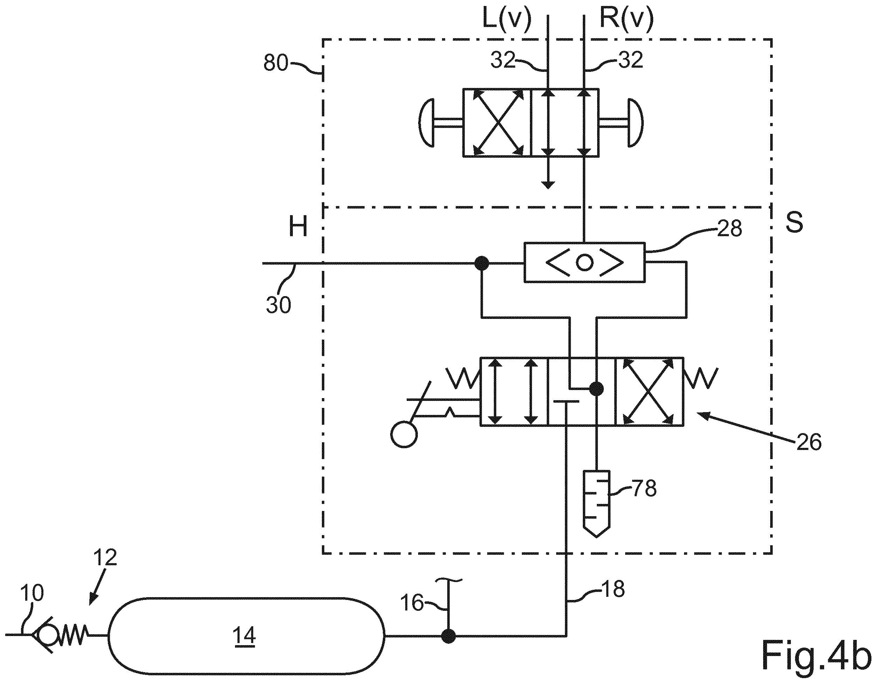

In Fig. 4a ist eine alternative Ausgestaltung der Hebe- und Senkeinrichtung 22 angedeutet. Diese Ausführungsform entspricht im Wesentlichen derjenigen gemäß Fig. 2. Alternativ hierzu ist bei der Hebe- und Senkeinrichtung 22 gemäß Fig. 4b außerdem ein Handventil 80 dargestellt. Hierdurch ist es möglich, bei bestimmten Fahrzeugen, bei denen die vordere und hintere Tragachse TA1 bzw. TA2 unabhängig gesteuert werden soll, durch dieses als 4/2-WegeSchaltventil gestaltete Handventil 80 eine entsprechende Umschaltmöglichkeit zu schaffen. So können beispielsweise die vordere oder hintere Tragachse TA1 bzw. TA2 oder aber die linke oder rechte Fahrzeugseite separat gehoben oder gesenkt werden.

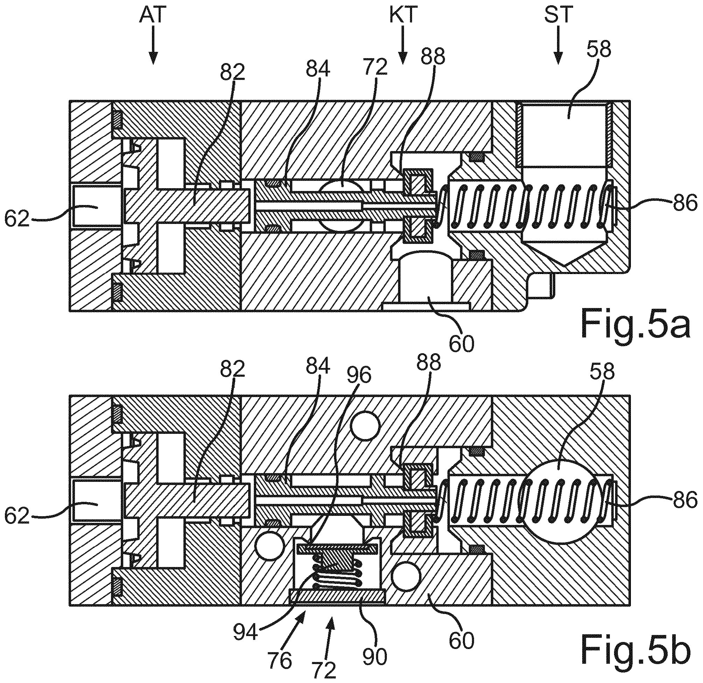

In den Fig. 5a und 5b ist in einer jeweiligen Schnittansicht ein 90° gedrehter Längsschnitt durch das Schaltventil 56 der Luftfedereinrichtung LE der Liftachse LA dargestellt. Eine Besonderheit besteht zunächst darin, dass das Schaltventil 56 im Wesentlichen dreiteilig gestaltet ist, umfassend einen Aktorteil AT, einen Kolbenteil KT und einen Schlussteil ST. Im Aktorteil AT ist dabei ein Einlass für die Druckluftleitung 62 vorgesehen, welche durch Zuführen von Druckluft ein Aktor 82 in Form eines Stößels axial bewegbar ist. Dieser Aktor 82 ist getrennt von einem Kolben 84 ausgebildet, welcher seinerseits druckausgeglichen ist, sodass dieser durch eine relativ geringe Kraft des Aktors 82 betätigt werden kann. Der Kolben 84 ist dabei mittels einer Feder 86 auf einem Schaltventilsitz 88 gehalten. In der hier gezeigten Stellung des Kolbens 84, in welcher dieser auf dem Schaltventilsitz 88 ruht, ist der Anschluss der Leitung 58 mit dem Anschluss der Leitung 60 verbunden. In dieser Stellung fungiert demzufolge die Liftachse LA gemäß Fig. 1 als normale Tragachse.

Wie insbesondere aus Fig. 5b erkennbar ist, umfasst das Schaltventil 56 zusätzlich im Kolbenteil KT einen Anschluss für die Druckluftleitung 72 gemäß den Fig. 1 bzw. 2. Wie überdies aus Fig. 5b erkennbar ist, ist in diesem Anschluss vorliegend das Überdruckventil 74 integriert. Dieses wird vorliegend eine beispielsweise über Bohrungen luftdurchlässige Stützscheibe 90, an welchem unter Vermittlung einer Feder 92 ein Dichtelement 94 gegen einen Schaltventilsitz 96 abgestützt ist. Durch geeignete Wahl der Feder 92 kann somit der Restdruck bestimmt werden, welcher innerhalb der jeweiligen Luftfeder 54 der Luftfedereinrichtung 52 der Liftachse LA verbleiben soll, wenn das Schaltventil 56 geschaltet und die Luftfedern 54 mittels der Luftfeder 64 der Lifteinrichtung L kombiniert werden. Auf Fig. 4b ist dabei insbesondere erkennbar, dass Luft vom Anschluss der Leitung 60 zum Anschluss der Leitung 72 überströmen kann, in der Kolben 84 vom Schaltventilsitz 88 abgehoben ist.

In Fig.6 in einer Schnittansicht eine Luftfedereinheit LE, welche Luftfeder 34 und das oberseitig von dieser angeordnete Schaltventil 36 umfasst. Dabei ist das Schaltventil 36 unmittelbar außen- bzw. oberseitig einer Abdeckung 35, welche einen Federbalgs 37 der Luftfeder 34 verschließt, angeordnet. Die Abdeckung 35 wird üblicher Weise auch als obere Luftfederplatte bezeichnet und ist üblicher Weise als Metallplatte ausgebildet. Dabei weist das Schaltventil 36 einen Schaltventilanschluss 98 auf, welcher über einen Luftfederanschluss 99 mit der Luftfeder 34 verbunden ist. Der Luftfederanschluss 99 ist vorliegend als Öffnung innerhalb der Abdeckung 35 vorgesehen und dient dazu, das Schaltventil 36 fluidisch mit der Luftfeder 34 zu verbinden. Der Schaltventilanschluss 98 und der Luftfederanschluss 99 sind dabei vorliegend zumindest im Wesentlichen in Überdeckung zueinander angeordnet, sodass Druckluft vom Schaltventil 36 in die Luftfeder 34 - oder umgekehrt - überströmen kann. Das Schaltventil 36 ist dabei im Bereich des Schaltventilanschlusses 98 mittels einer Ringdichtung 101 gegenüber der Abdeckung 35 im Bereich des Luftfederanschluss 99 abgedichtet. Ein weiterer Anschluss 100 dient vorliegend zur Verbindung beispielsweise mit der Leitung 46 gemäß Fig. 1.

Auch im vorliegenden Fall ist erkennbar, dass das Schaltventil 36 im Wesentlichen dreiteilig gestaltet ist mit einem Aktorteil AT, einem Kolbenteil KT und einem Schlussteil ST. Der Kolbenteil KT ist dabei aus einer Metalllegierung und der Aktorteil AT aus einem Kunststoff hergestellt. Im Aktorteil AT weist das Schaltventil 36 einen elektromagnetisch betätigbaren Aktor 102 auf, welcher durch entsprechende Schaltung mittels der zugehörigen Steuerleitung, beispielsweise der Leitung 44, betätigbar ist. Der Aktor 102 ist dabei lose mit einem Kolben 104 verbunden, welcher seinerseits über eine Feder 106 gegen einen Schaltventilsitz 108 abgestützt ist. Wiederum ist erkennbar, dass es sich auch vorliegend um ein druckentlastetes elektromagnetisches Schaltventil handelt. Hierzu ist eine Druckausgleichsleitung 103 eingezeichnet, über welche der Kolben 104 druckentlastet ist. Der Kolben 104 ist mittels einer Kolbendichtung 118 gegen ein Gehäuse des Kolbenteils KT, in welchem der Kolben 104 aufgenommen ist, abgedichtet.

Weiterhin ist erkennbar, dass der Drucksensor 40 und der Höhensensor 42 vorliegend in das Schaltventil 36 integriert sind. Der Drucksensor 40 ist dabei über eine fluidische Sensorleitung 105 mit dem Schaltventilanschluß 98 bzw. dem Luftfederanschluss 99 verbunden.

Darüber hinaus umfasst das Schaltventil 36 im hier gezeigten Ausführungsbeispiel im Aktorteil AT einen weiteren Schaltventilanschluss 107 für den Höhensensor 42. Der Schaltventilanschluss 107 ist dabei - nach Art des zuvor beschriebenen Übergangs zwischen dem Schaltventilanschluss 98 und dem Luftfederanschluss 99 - zumindest im Wesentlichen in Überdeckung mit einem weiteren Luftfederanschluss 109 in der Abdeckung 35 angeordnet. Der Höhensensor 42, beispielsweise ein Hall-Sensor, korrespondiert vorliegend mit einem Magneten 111 in Form eines Dauermagneten, welcher auf Seiten der Luftfeder 34, beispielsweise an einem Kolben 113 der Luftfeder 34, vorgesehen ist. Im Aktorteil AT sind überdies Elektronikkomponenten 115 vorgesehen, welche die von den Sensoren 40, 42 erfassten Daten verarbeiten können.

Das Schaltventil 36 ist im Bereich des Schaltventilanschlusses 107 mittels einer weiteren Ringdichtung 116 gegenüber der Abdeckung 35 im Bereich des Luftfederanschlusses 109 abgedichtet. Vorliegend sind die Ringdichtungen 101 und 116 separat voneinander ausgebildet. Alternativ wäre es jedoch denkbar, dir Ringdichtungen 101 und 116 in eine einstückige Formdichtung zu integrieren bzw. das Schaltventil 36 gegenüber der Abdeckung 35 insbesondere im Bereich der jeweiligen Luftfederanschlüsse 99, 109 bzw. im Bereich der jeweiligen Schaltventilanschlüsse 98, 107 mittels einer einstückigen Formdichtung abzudichten. Dabei ist die Formdichtung zwischen dem Schaltventil 36 und der Abdeckung 35 angeordnet, sodass das Schaltventil 36 zumindest in einem Teilbereich unter Vermittlung der Formdichtung an der Abdeckung 35 abgestützt bzw. angeordnet ist.

Eine weitere Besonderheit des vorliegenden Schaltventils 36 liegt darin, dass dieses nicht nur elektromagnetisch mittels des Aktors 102 zu schalten ist, sondern außerdem einen Steueranschluss 110 beispielsweise für die Leitung 32 bzw. 30 aufweist, über welchen der Kolben 104 in Abhängigkeit eines in der Druckluftleitung 32 bzw. 30 vorherrschenden Luftdrucks schaltbar ist. Dies kann beispielsweise dann erfolgen, wenn ein Anhänger mit dem Schaltventil 36 nicht mehr mit einem Zugfahrzeug verbunden ist und demzufolge nicht mehr mit elektrischem Strom versorgt wird, so dass auch nicht mehr der Aktor 102 mit elektrischem Strom zum Betätigen des Kolbens 104 versorgt werden kann. Der Kolben 104 kann dann jedoch per Druckluft geschaltet werden. Somit eignet sich das vorliegende Schaltventil 36 zum Einsatz bei der beschriebenen Hebe- und Senkeinrichtung 22, und zwar entweder als Schaltventil 36 oder aber auch als Hauptventil 20.

Die vorliegend beschriebene Luftfedereinheit eignet sich bei den Schaltungen gemäß den Fig. 1 bis 3 beispielsweise für die Tragachsen TA1 und TA2, die Liftachse LA und auch die Lifteinrichtung L. Mit anderen Worten ist die vorliegende Luftfedereinheit immer dann besonders günstig, wenn wenigstens eine Luftfeder durch ein zugehöriges Ventil be- oder entlüftbar sein soll.

Sollen mehrere Luftfedern 34, 54 mittels lediglich eines Schaltventils 36 geschaltet werden können, so kann - vie in Fig. 6 gestrichelt angedeutet - beispielsweise im Schaltventilanschluss 98 ein weiterer Schaltventilanschluss 117 vorgesehen werden. Diese Anordnung entspricht beispielsweise derjenigen der Liftachse LA gemäß Fig.1 (Luftfedern 54 und Ventil 56) oder der Tragachsen TA1 und TA2 gemäß Fig.1 (Luftfedern 34 und Ventile 36, 38).

Wenn der Schaltventilanschluss 117 nicht benötigt wird, kann dort alternativ ein Prüfanschluss 119 vorgesehen werden. Über den Prüfanschluss ist es möglich, den in der Luftfeder 34 herrschenden Druck zu messen, wenn beispielsweise kein elektrischer Strom oder kein Drucksensor vorhanden ist. Ferner ist es möglich, die Luftfeder 34 über den Prüfanschluss 119 im Notfall mit Druckluft aus einer anderen, bezogen auf das Fahrzeug externen Druckluftquelle zu befüllen. Bei dem Schaltventil 36 mit dem Schaltventilanschluss 117 ist es alternativ möglich, am Ausgang ein T-Stück bzw. eine T-Verschraubung einzusetzen und am T-Stück bzw. an der T-Verschraubung den Prüfanschluss 119 vorzusehen.

In Fig. 7 ist eine gegenüber Fig. 6 modifizierte Ausführungsform des Schaltventils 36 gezeigt. Als Aktor bzw. Betätigungsvorrichtung 112 ist im vorliegenden Fall ein Linearschrittmotor vorgesehen, welcher die in Zusammenhang mit Fig. 7 erläuterten Vorteile mit sich bringt. Auch dieser Linearschrittmotor ist über einen Stößel 114 mit dem zugehörigen Kolben nicht fest verbunden. Zwar kann der Kolben 104 demzufolge mittels des Betätigungselements 112 vom Schaltventilsitz abgehoben werden, jedoch auch unabhängig vom Betätigungselement 112 bewegt werden. Insofern ist eine technisch gleiche Wirkungsweise wie beim Schaltventil 36 gegeben, bei welchem der Aktor 102 ebenfalls separat in dem Kolben 104 ausgebildet ist.

Die separate Ausgestaltung des Kolbens 104 vom Aktor 102 bzw. vom Betätigungselement 112 ist in erster Linie deshalb gegeben, weil laut der Ausführungsform gemäß Fig. 7 ein Steueranschluss 110 vorhanden ist, mittels welchem der Kolben 104 unabhängig von dem Betätigungselement 112 in Abhängigkeit eines in der Druckluftleitung vorherrschenden Druckluft geschaltet können werden soll. Insoweit gilt dies für beide Ausführungsformen des Schaltventils 36 gemäß den Fig. 5 und 6. Eine Druckausgleichsleitung, welche vorliegend nicht gezeigt ist, soll nach Art des Ventils 36 gemäß Fig. 6 ebenfalls vorgesehen sein.

Gemäß Fig. 6 und 7 befindet sich der Kolben 104 in einer Drucklosstellung, welche der Kolben 104 beispielsweise in der Grundstellung des Hauptventils 20 einnimmt. In dieser Drucklosstellung des Kolbens 104 sind der Anschluss 100 und somit die Leitung 46 vom Schaltventilanschluss 98 und somit vom Luftfederanschluss 99 und von der Luftfeder 34 fluidisch getrennt. Der Anschluss 100 ist somit in der Drucklosstellung drucklos bzw. der Anschluss 100 ist getrennt und unabhängig von einem in der Luftfeder 34 herrschenden Druck.

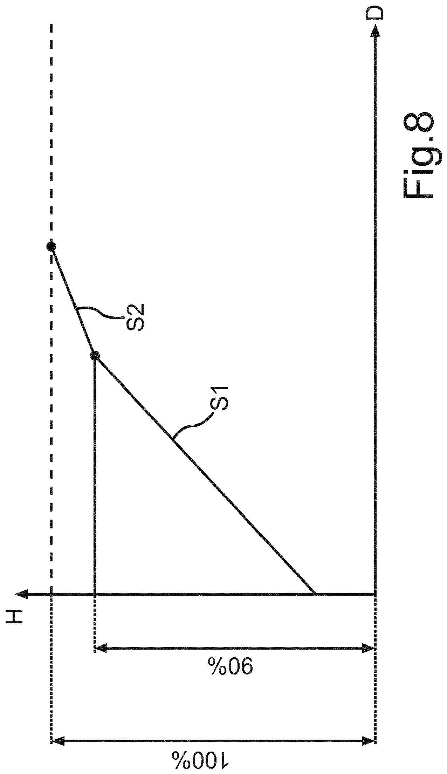

In Fig. 8 ist schließlich erkennbar weshalb sich ein Linearschrittmotor als Betätigungselement 112 besonders eignet.
Hierbei ist auf der y-Achse eine Höhe H abgetragen, um welche beispielsweise der Fahrzeugrahmen der jeweiligen Luftfederanlage angehoben werden soll. Auf der x-Achse ist im Verhältnis hierzu die Durchflussmenge D durch das Schaltventil 36 angegeben. Wie nun aus Fig. 7 erkennbar ist, weist ein Schaltventil 36 mit Linearschrittmotor 112 den Vorteil auf, dass ca. 90 % der Höhe H der jeweils zurückzulegenden Hebe- bzw. Senkbewegung mit großer Durchflussmenge erfolgen können, und eine Feineinstellung der letzen 10 % der Höhe mit einer geringeren Durchflussmenge. Ein Linearschrittmotor 112 ist dabei besonders günstig geeignet, um den Kolben 104 entsprechend so zu bewegen, dass sich unterschiedliche Durchflussmengen ergeben. Dies ist hingegen bei elektromagnetischen Lösungen ohne weiteres möglich.

Der Kolben 104 ist zwischen einer beispielsweise in Fig. 6 gezeigten Schließstellung und wenigstens einer Offenstellung mittels des Aktors 102 bzw. 112 verstellbar. Um den Kolben 104 beispielsweise aus der Schließstellung in die Offenstellung zu bewegen, wird der Aktor 102 bzw. 112 bestromt, d.h. mit elektrischem Strom versorgt, welcher von dem Aktor 102 bzw. 112 verbraucht wird. In unbestromtem Zustand des Aktors 102 bzw. 112 nimmt der Kolben 104 seine Schließstellung ein. D.h. wird der Aktor 102 bzw. 112 nicht mehr mit elektrischem Strom versorgt, bewegt sich der Kolben 104 in seine Schließstellung. Diese Bewegung aus der Offenstellung in die Schließstellung wird beispielsweise durch die Feder 106 bewirkt, welche beim Bewegen des Kolbens 104 aus der Schließstellung in die Offenstellung gespannt wird und sich - wenn der Aktor 102 bzw. 112 nicht mehr bestromt wird - unter Federkraftbeaufschlagung des Kolbens 104 wieder zumindest teilweise entspannen kann. Dadurch wird der Kolben 104 mittels der Feder 106 zurück in seine Schließstellung auf den Schaltventilsitz 108 gedrückt. Die Schließstellung entspricht somit der Grundstellung des Kolbens 104 bzw. des Schaltventils 36, in dem der Aktor 102 bzw. 112 nicht bestromt ist.

In der Offenstellung kann beispielsweise Druckluft über die Druckluftleitung 46, den weiteren Anschluss 100, den Schaltventilanschluss 98 und den Luftfederanschluss 99 in die Luftfeder 34 eingeleitet werden, da die Druckluftleitung 46 und insbesondere der weitere Anschluss 100 mit dem Schaltventilanschluss 98, dem Luftfederanschluss 99 und der Luftfeder 34 fluidisch verbunden sind.
In der Schließstellung jedoch sind da die Druckluftleitung 46 und insbesondere der weitere Anschluss 100 von dem gegebenenfalls vorgesehen Schaltventilanschluss 117, dem gegebenenfalls vorgesehenen Prüfanschluss 119, dem Schaltventilanschluss 98, dem Luftfederanschluss 99 und der Luftfeder 34 fluidisch getrennt. Somit können herkömmlicherweise vorgesehene Verschraubungen, welche bei herkömmlichen Luftfedereinheiten ständig unter Druck zwischen einem Schaltventil und einer Luftfeder stehen, entfallen.

### Bezugszeichenliste

- 10: Leitung
- 12: Rückschlagventil
- 14: Druckluftspeicher
- 16: Druckluftleitung
- 18: Druckluftleitung
- 19: Schaltventil
- 20: Hauptventil
- 21: Leitung
- 22: Senkeinrichtung
- 23: Druckluftleitung
- 24: Druckminderer
- 25: Schaltanschluss
- 26: Handventil
- 28: Oder-Ventil
- 30: Leitung
- 32: Druckluftleitung
- 34: Luftfedern
- 35: Abdeckung
- 36: Halteventil
- 37: Federbalg
- 38: Halteventil
- 40: Drucksensor
- 42: Höhensensor
- 44: Steuerleitung
- 46: Druckluftleitung
- 48: Steuerleitung
- 50: Schalldämpfer
- 52: Luftfedereinrichtung
- 54: Luftfedern
- 56: Schaltventil
- 58: Druckluftleitung
- 60: Leitung
- 62: Steuerleitung
- 64: Luftbalg
- 66: Drucksensor
- 68: Schaltventil
- 70: Steuerleitung
- 72: Druckluftleitung
- 74: Überdruckventil
- 76: Schalldämpfer
- 78: Schalldämpfer
- 80: Handventil
- 82: Aktor
- 84: Kolben
- 86: Feder
- 88: Ventilsitz
- 90: Stützscheibe
- 92: Feder
- 94: Dichtelement
- 96: Ventilsitz
- 98: Schaltventilanschluss
- 99: Luftfederanschluss
- 100: Anschluss
- 101: Ringdichtung
- 102: Aktor
- 103: Druckausgleichsleitung
- 104: Kolben
- 105: Sensorleitung
- 106: Feder
- 107: Schaltventilanschluss
- 108: Schaltventilsitz
- 109: Luftfederanschluss
- 110: Steueranschluss
- 111: Magnet
- 112: Betätigungselement
- 113: Kolben
- 114: Stößel
- 115: Elektronikkomponenten
- 116: Ringdichtung
- 117: Schaltventilanschluss
- 118: Kolbendichtung
- 119: Prüfanschluss
- TA1: Tragachse
- TA2: Tragachse
- LA: Liftachse
- L: Lifteinrichtung
- LFS: Luftfedersteuerung
- H: Hebefunktion
- S: Senkfunktion
- AT: Aktorteil
- KT: Kolbenteil
- ST: Schlussteil

## Patentansprüche

1. Luftfedereinheit, insbesondere für eine Luftfederanlage eines Fahrzeugs, mit einer Luftfeder (34), welche einen durch eine Abdeckung (35) verschlossenen Federbalg (37) aufweist, und mit einem einen zwischen einer Schließstellung und wenigstens einer Offenstellung verstellbaren Kolben (104) aufweisenden Schaltventil (36), welches über wenigstens einen Schaltventilanschluss (98) mit einem Luftfederanschluss (99) der Luftfeder (34) fluidisch verbunden ist, wobei das Schaltventil (36) zumindest mittelbar außenseitig der Abdeckung (35) der Luftfeder (34) angeordnet ist, und wobei der Schaltventilanschluss (98) und der in der Abdeckung (35) der Luftfeder (34) vorgesehene Luftfederanschluss (99) zumindest im Wesentlichen in Überdeckung zueinander angeordnet sind,
**dadurch gekennzeichnet, dass**
der Kolben (104) des Schaltventils (36) über eine Druckausgleichsleitung (103) druckentlastet ist.

2. Luftfedereinheit nach Anspruch 1,
**dadurch gekennzeichnet, dass**
das Schaltventil (36) einen weiteren Schaltventilanschluss (100) aufweist, wobei Luft über die Schaltventilanschlüsse (98, 100) in die Luftfeder (34) einleitbar ist, und wobei der erste Schaltventilanschluss (98) und die Luftfeder (34) mit dem Luftfederanschluss (99) in der Schließstellung des Kolbens (104) von dem weiteren Schaltventilanschluss (100) fluidisch getrennt sind.

3. Luftfedereinheit nach Anspruch 1 oder 2,
**dadurch gekennzeichnet, dass**
das Schaltventil (36) im Bereich des Schaltventilanschlusses (98) mittels einer Dichtung (101) gegenüber der Abdeckung (35) im Bereich des Luftfederanschluss (99) abgedichtet ist.

4. Luftfedereinheit nach einem der vorhergehenden Ansprüche,
**dadurch gekennzeichnet, dass**
wenigstens ein weiterer Schaltventilanschluss (107), insbesondere für einen Sensor (42), mit einem in der Abdeckung (35) der Luftfeder (34) vorgesehenen weiteren Luftfederanschluss (109) zumindest im Wesentlichen in Überdeckung zueinander angeordnet ist.

5. Luftfedereinheit nach einem der vorhergehenden Ansprüche,
**dadurch gekennzeichnet, dass**
ein Kolbenteil (KT) des Schaltventils (36) aus einer Metalllegierung oder einem Kunststoff gebildet ist.

6. Luftfedereinheit nach einem der vorhergehenden Ansprüche,
**dadurch gekennzeichnet, dass**
ein Aktorteil (AT) des Schaltventils (36) aus einem Kunststoff gebildet ist.

7. Luftfedereinheit nach einem der vorhergehenden Ansprüche,
**dadurch gekennzeichnet, dass**
ein Sensor, insbesondere ein Drucksensor (40), über eine fluidische Sensorleitung (105) mit dem Schaltventilanschluß (98) verbunden ist.

8. Luftfedereinheit nach einem der vorhergehenden Ansprüche,
**dadurch gekennzeichnet, dass**
von dem Schaltventilanschluss (98) ein Anschluss (117) für eine weitere Luftfeder abgezweigt ist.

9. Luftfedereinheit nach einem der vorhergehenden Ansprüche,
**dadurch gekennzeichnet, dass**
ein mit einem Höhensensor (42) korrespondierender Magnet, insbesondere ein Dauermagnet (111), auf Seiten der Luftfeder (34) vorgesehen ist.

10. Luftfederanlage für ein Fahrzeug, mit wenigstens einer Achse (TA1, TA2, LA), welcher wenigstens eine Luftfedereinheit (LFE) nach einem der Ansprüche 1 bis 9 zugeordnet ist,
**dadurch gekennzeichnet, dass**
die wenigstens eine Luftfedereinheit (LFE) in eine über ein Hauptventil (20) mit Druckluft versorgbare Schaltung integriert ist, wobei die Schaltung in einer Grundstellung des Hauptventils (20) drucklos ist.

## Claims

1. Air spring unit, in particular for an air spring system of a vehicle, including an air spring (34), which has a bellows (37) closed by a cover (35), and including a switch valve (36) having a piston (104) adjustable between a closure position and at least one open position, which is fluidically connected to an air spring connection (99) of the air spring (34) via at least one switch valve connection (98), wherein the switch valve (36) is at least indirectly arranged externally of the cover (35) of the air spring (34), and wherein the switch valve connection (98) and the air spring connection (99) provided in the cover (35) of the air spring (34) are arranged at least substantially overlapping with each other,
**characterized in that**
the piston (104) of the switch valve (36) is pressure-relieved via a pressure equalization line (103).

2. Air spring unit according to claim 1,
**characterized in that**
the switch valve (36) has a further switch valve connection (100), wherein air can be introduced into the air spring (34) via the switch valve connections (98, 100), and wherein the first switch valve connection (98) and the air spring (34) with the air spring connection (99) are fluidically separated from the further switch valve connection (100) in the closure position of the piston (104).

3. Air spring unit according to claim 1 or 2,
**characterized in that**
the switch valve (36) is sealed in the area of the switch valve connection (98) by means of a seal (101) with respect to the cover (35) in the area of the air spring connection (99).

4. Air spring unit according to any one of the preceding claims,
**characterized in that**
at least one further switch valve connection (107), in particular for a sensor (42), is arranged at least substantially overlapping with each other with a further air spring connection (109) provided in the cover (35) of the air spring (34).

5. Air spring unit according to any one of the preceding claims,
**characterized in that**
a piston part (KT) of the switch valve (36) is formed of a metal alloy or a plastic.

6. Air spring unit according to any one of the preceding claims,
**characterized in that**
an actuator part (AT) of the switch valve (36) is formed of a plastic.

7. Air spring unit according to any one of the preceding claims,
**characterized in that**
a sensor, in particular a pressure sensor (40), is connected to the switch valve connection (98) via a fluidic sensor line (105).

8. Air spring unit according to any one of the preceding claims,
**characterized in that**
a connection (117) for a further air spring is branched from the switch valve connection (98).

9. Air spring unit according to any one of the preceding claims,
**characterized in that**
a magnet corresponding to an altitude sensor (42), in particular a permanent magnet (111), is provided on sides of the air spring (34).

10. Air spring system for a vehicle with at least one axle (TA1, TA2, LA), with which at least one air spring unit (LFE) according to any one of claims 1 to 9 is associated,
**characterized in that**
the at least one air spring unit (LFE) is integrated in a circuit capable of being supplied with compressed air via a main valve (20), wherein the circuit is unpressurized in a basic position of the main valve (20).

## Revendications

1. Unité de suspension pneumatique, en particulier pour une installation de suspension pneumatique d'un véhicule, avec une suspension pneumatique (34), qui présente un soufflet à ressort (37), obturé par le biais d'un cache (35) et avec une soupape de commutation (36), présentant un piston (104), réglable entre une position de fermeture et au moins une position ouverte, qui est reliée de manière fluidique par l'intermédiaire d'au moins un raccord de soupape de commutation (98), à un raccord de suspension pneumatique (99) de la suspension pneumatique (34), la soupape de commutation (36) étant agencée au moins indirectement à l'extérieur du cache (35) de la suspension pneumatique (34) et le raccord de soupape de commutation (98) et le raccord de suspension pneumatique (99), prévu dans le cache (35) de la suspension pneumatique (34) étant agencés au moins essentiellement en recouvrement l'un par rapport à l'autre,
**caractérisée en ce que**
le piston (104) de la soupape de commutation (36) est détendu en pression par l'intermédiaire d'une conduite compensatrice de pression (103).

2. Unité de suspension pneumatique selon la revendication 1,
**caractérisée en ce que**
la soupape de commutation (36) présente un autre raccord de soupape de commutation (100), de l'air pouvant être introduit par l'intermédiaire des raccords de soupapes de commutation (98, 100) dans la suspension pneumatique (34) et le premier raccord de soupape de commutation (98) et la suspension pneumatique (34), avec le raccord de suspension pneumatique (99) dans la position de fermeture du piston (104), étant séparés de manière fluidique de l'autre raccord de soupape de commutation (100).

3. Unité de suspension pneumatique selon la revendication 1 ou 2,
**caractérisée en ce que**
la soupape de commutation (36) est étanchéifiée, dans le secteur du raccord de soupape de commutation (98), au moyen d'un joint d'étanchéité (101) face au cache (35), dans le secteur du raccord de suspension pneumatique (99).

4. Unité de suspension pneumatique selon l'une des revendications précédentes,
**caractérisée en ce**
**qu'**au moins un autre raccord de soupape de commutation (107), en particulier pour un capteur (42), est agencé avec un autre raccord de suspension pneumatique (109), prévu dans le cache (35) de la suspension pneumatique (34), au moins essentiellement en recouvrement l'un par rapport à l'autre.

5. Unité de suspension pneumatique selon l'une des revendications précédentes,
**caractérisée en ce**
**qu'**une partie de piston (KT) de la soupape de commutation (36) est constituée d'un alliage métallique ou d'une matière plastique.

6. Unité de suspension pneumatique selon l'une des revendications précédentes,
**caractérisée en ce**
**qu'**une partie d'actionneur (AT) de la soupape de commutation (36) est constituée d'une matière plastique.

7. Unité de suspension pneumatique selon l'une des revendications précédentes,
**caractérisée en ce**
**qu'**un capteur, en particulier un capteur de pression (40), est relié au raccord de soupape de commutation (98) par l'intermédiaire d'un câble de capteur fluidique (105).

8. Unité de suspension pneumatique selon l'une des revendications précédentes,
**caractérisée en ce**
**qu'**un raccord (117) pour une autre suspension pneumatique est dérivé du raccord de soupape de commutation (98).

9. Unité de suspension pneumatique selon l'une des revendications précédentes,
**caractérisée en ce**
**qu'**un aimant, correspondant avec un capteur de hauteur (42), en particulier un aimant permanent (111) est prévu du côté de la suspension pneumatique (34).

10. Installation de suspension pneumatique pour un véhicule, avec au moins un axe (TA1, TA2, LA), à laquelle est affectée au moins une unité de suspension pneumatique (LFE) selon l'une des revendications 1 à 9,
**caractérisée en ce que**
la au moins une unité de suspension pneumatique (LFE) est intégrée dans un circuit, pouvant être alimenté en air comprimé par l'intermédiaire d'une vanne principale (20), le circuit étant sans pression dans une position de base de la vanne principale (20).
